# EUROPÄISCHE PATENTSCHRIFT

(11) **EP 1 189 507 B1**
(45) Veröffentlichungstag und Bekanntmachung des Hinweises auf die Patenterteilung: **18.08.2004**
(21) Anmeldenummer: 00947875.1
(22) Anmeldetag: 23.06.2000
(51) Int. Cl.: A01N 33/04

(54) **DESINFEKTIONSMITTEL**
DISINFECTANTS
DESINFECTANTS

(30) Priorität: 25.06.1999 EP 99112262
(43) Veröffentlichungstag der Anmeldung: 27.03.2002
(73) Patentinhaber: Lonza AG, 4052 Basel (CH)
(72) Erfinder: LICHTENBERG, Florian, D-79639 Grenzach-Wyhlen (DE); LÜTZELER, Michael, D-79639 Grenzach-Wyhlen (DE); RANFT, Volker, D-79730 Murg (DE)
(86) Internationale Anmeldenummer: PCT/EP2000/005871
(87) Internationale Veröffentlichungsnummer: WO 2001/000024

(56) Entgegenhaltungen:
- EP-A- 0 080 137
- EP-A- 0 343 605
- GB-A- 1 300 694
- US-A- 5 760 091

## Beschreibung

Die Erfindung betrifft Desinfektionsmittel auf der Basis von *N*,*N-*Bis(3-aminopropyl)-octylamin der Formel

*n*-C₈H₁₇―N[(CH₂)₃―NH₂]₂.

Es ist bekannt, dass das *N*,*N*-Bis(3-aminopropyl)dodecylamin (Handelsname: LONZABAC® 12) eine gute mikrobizide Wirksamkeit besitzt und insbesondere auch gegen Mykobakterien wirksam ist. Diese Verbindung zeichnet sich zudem durch eine gute Verträglichkeit mit Tensiden und geringe Korrosivität aus. Wie bei vielen anderen mikrobiziden Wirkstoffen lässt jedoch die Wirksamkeit in Gegenwart von Proteinen und/oder hartem Wasser deutlich nach und es kommt zu Trübungen oder sogar Ausfällungen. Ausserdem neigen Formulierungen mit *N*,*N-*Bis(3-aminopropyl)dodecylamin stark zur Schaumbildung, was sie für manche Anwendungen ungeeignet macht oder spezielle Massnahmen erfordert.

US-A-5 760 091 offenbart Mittel zur Verhinderung des Anhaftens von Meeresorganismen wie beispielsweise Muscheln an dem Meerwasser ausgesetzten Oberflächen ("antifouling agents"). Diese Mittel können Amine der Formel R-N[(CH₂)₃NH₂]₂ enthalten, wobei R ein gesättigter oder ungesättigter aliphatischer Kohlenwasserstoffrest mit 8-22 Kohlenstoffatomen ist. Über eine abtötende Wirkung dieser Mittel auf Mikroorganismen wird nichts offenbart.

Aufgabe der vorliegenden Erfindung war daher, Desinfektionsmittel bereitzustellen, die bei vergleichbarem Wirkungsspektrum eine geringe Schaumbildung und einen geringen Wirkungsverlust in Gegenwart von Proteinen aufweisen.

Erfindungsgemäss wird diese Aufgabe durch die Verwendung von *N*,*N-*Bis(3-aminopropyl)octylamin nach Patentanspruch 1 und die Desinfektionsmittel nach Patentanspruch 2 gelöst.

Es wurde überraschend gefunden, dass die als Zwischenprodukt in der Synthese von Tensiden bekannte Verbindung *N*,*N-*Bis(3-aminopropyl)octylamin (EP-A-0 080 137) eine gute antibakterielle Wirksamkeit, insbesondere auch gegen Mykobakterien, besitzt, welche auch in Gegenwart von Proteinen praktisch unverändert erhalten bleibt. Zudem weist diese Verbindung eine geringe Schaumbildungstendenz auf.

Die erfindungsgemässen Desinfektionsmittel enthalten zweckmässig 0,1 bis 30,0% *N*,*N*-Bis(3-aminopropyl)octylamin und wenigstens einen Hilfsstoff, welcher ausgewählt ist aus der Gruppe bestehend aus Lösungsmitteln, Tensiden, Komplexbildnern, Farbstoffen, Duftstoffen, Säuren oder Basen zur pH-Einstellung, anorganischen und organischen Salzen (z. B. Borate, Silikate, Carbonate, Rhodanide).

Vorzugsweise enthalten die erfindungsgemässen Desinfektionsmittel Wasser als Lösungsmittel.

In einer bevorzugten Ausführungsform enthalten die erfindungsgemässen Desinfektionsmittel als zusätzlichen Wirkstoff ein Aminoxid. Als Aminoxide eignen sich beispielsweise *N*,*N*-Di-C₁₋₄-alkyl-C₆₋₂₂-alkylaminoxide, vorzugsweise *N*,*N*-Dimethyl-C₈₋₁₈-alkylaminoxide. Derartige Aminoxide sind beispielsweise unter der Bezeichnung BARLOX® von der Firma Lonza AG erhältlich.

Die erfindungsgemässen Desinfektionsmittel eignen sich insbesondere für die Anwendung in sogenannten CIP-Anlagen (CIP = cleaning in place), zur Desinfektion von Behältern, Flächen und Rohrleitungen in der Lebensmittelindustrie, zur Verhinderung der Verkeimung von geschlossenen Wasserkreisläufen, beispielsweise in der Papierindustrie oder in Kühltürmen, sowie zur Flächendesinfektion in Krankenhäusern, zur Instrumentendesinfektion, zur Desinfektion von rezirkulierenden Toiletten, zur Wasserbehandlung ( z. B. in Swimmingpools, sowie zum Holzschutz.

Eine besonders bevorzugte Anwendung ist die automatische Instrumentendesinfektion bei Temperaturen von weniger als 60 °C, insbesondere in automatischen Vorrichtungen, beispielsweise zur Desinfektion von Endoskopen.

Die folgenden Beispiele verdeutlichen die Ausführung der Erfindung, ohne dass darin eine Einschränkung zu sehen ist. Soweit nichts anderes angegeben ist, sind alle Prozentangaben in Gewichtsprozenten.

### Beispiel 1 / Vergleichsbeispiel 1

### Bestimmung der Schaumbildung

### Methode:

Ein 250 ml Mischzylinder wurde mit 100 ml Lösung gefüllt. Nach dem Verschwinden von hierbei etwa gebildetem Schaum wurde der verschlossene Zylinder für 15 s kräftig vertikal geschüttelt (ca. 15×) und dann auf eine ebene Unterlage gestellt. Das Volumen des entstandenen Schaums wurde in regelmässigen Zeitabständen abgelesen.

### Ergebnisse:

Bei einer Lösung von 250 ppm *N*,*N-*Bis(3-aminopropyl)octylamin in entsalztem Wasser von 20 °C wurden nach 10 s 20 ml Schaum beobachtet, dessen Volumen in weiteren 10 s auf die Hälfte zurückging. Nach 60 s war der Schaum fast völlig verschwunden. Zum Vergleich wurde der gleiche Test mit *N*,*N-*Bis(3-aminopropyl)dodecylamin durchgeführt. Das Schaumvolumen betrug nach 10 s 140 ml und nach 60 s immer noch 120 ml.

### Beispiel 2 / Vergleichsbeispiel 2

### Quantitativer Suspensionstest (EN 1276)

Gemäss Norm EN 1276 wurde für verschiedene Testkeime die Wirksamkeit von *N*,*N*-Bis-(3-aminopropyl)octylamin (erfindungsgemäss) und *N*,*N-*Bis(3-aminopropyl)dodecylamin (Vergleich) in Gegenwart von Albumin bestimmt. Die Ergebnisse sind in der folgenden Tabelle 1 zusammengefasst.

| | |
|---|---|
| Kontaktzeit | 5 min |
| Wasserhärte (als CaCO₃) | 300 mg/kg |
| Temperatur | 20°C |
| Log. Reduktion | > 5 |

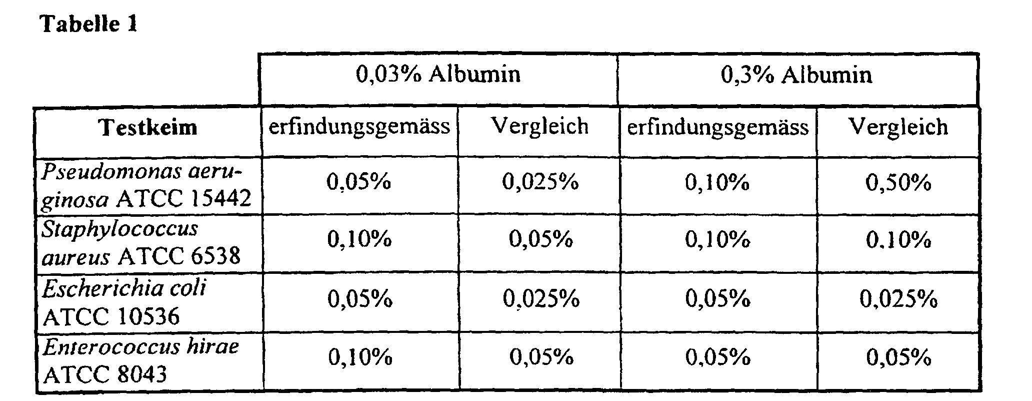

Es zeigte sich insbesondere gegenüber *P. aeruginosa* ein wesentlich geringerer Wirkungsabfall in Gegenwart von 0,3% Albumin.

### Beispiel 3 / Vergleichsbeispiel 3

### Formulierung mit nichtionischem Tensid

Es wurde eine flüssige Formulierung aus

| | |
|---|---|
| 10,0% | *N*,*N-*Bis(3-aminopropyl)octylamin |
| 2,5% | Trilon® A (Nitrilotriessigsäure, Natriumsalz; 40%ige wässrige Lösung) |
| 10,0% | Genapol® PF 10 (Ethylenoxid-Propylenoxid-Blockpolymerisat mit ca. 10% Ethylenoxid |
| 77,5% | Wasser |

hergestellt. Als Vergleich diente eine Formulierung mit der gleichen Menge *N*,*N*-Bis(3-aminopropyl)dodecylamin anstelle von *N*,*N*-Bis(3-aminopropyl)octylamin und ansonsten gleicher Zusammensetzung. Nach der in Beispiel 1 beschriebenen Methode wurde für beide Formulierungen die Schaumbildung bestimmt. Das Schaumvolumen betrug für die erfindungsgemässe Formulierung nach 10 s 50 ml und nach 60 s 30 ml. Bei der Vergleichsformulierung betrug das Schaumvolumen nach 10 s 150 ml und nach 60 s immer noch 100 ml.

### Beispiel 4

### Formulierung mit anionischem Tensid

Es wurde eine flüssige Formulierung aus

| | |
|---|---|
| 10,0% | *N*,*N*-Bis(3-aminopropyl)octylamin |
| 2,5% | Trilon® A (40%ige wässrige Lösung) |
| 10,0% | Genapol® LRO (C₁₂/C₁₄-Alkyldiglykolethersulfat, Na-Salz; waschaktive Substanz ca. 27%) |
| 77,5% | Wasser |

hergestellt.

### Beispiel 5

### Formulierung mit kationischem Tensid

Es wurde eine flüssige Formulierung aus

| | |
|---|---|
| 10,0% | *N*,*N*-Bis(3-aminopropyl)octylamin |
| 2,5% | Trilon® A (40%ige wässrige Lösung) |
| 10,0% | BARDAC® 22-40 (Didecyldimethylammoniumchlorid, 40%ige wässrige Lösung) |
| 77,5% | Wasser |

hergestellt.

### Beispiel 6

### Formulierung mit amphoterem Tensid

Es wurde eine flüssige Formulierung aus

| | |
|---|---|
| 10,0% | *N*,*N-*Bis(3-aminopropyl)octylamin |
| 2,5% | Trilon® A (40%ige wässrige Lösung) |
| 10,0% | Amphoterge® K-2 (Coco imidazoline dicarboxylate; Lonza AG) |
| 77,5% | Wasser |

hergestellt.

### Beispiel 7

### Formulierung mit Aminoxid

Es wurde eine flüssige Formulierung aus

| | |
|---|---|
| 10,0% | *N*,*N*-Bis(3-aminopropyl)octylamin |
| 2,5% | Trilon® A (40%ige wässrige Lösung) |
| 10,0% | BARLOX® 12 (Lauryl-dimethyl-aminoxid) |
| 77,5% | Wasser |

hergestellt.

### Beispiel 8

### Quantitativer Suspensionstest mit Mycobacterium terrae

Nach der in *Hygiene & Medizin* **1997**, *22*, S. 278-283 beschriebenen Methode wurde die Wirksamkeit von *N*,*N*-Bis(3-aminopropyl)octylamin gegen *Mycobacterium terrae* ATCC 15755 unter verschiedenen organischen Belastungen bestimmt. Die Wirkstoffkonzentration betrug jeweils 0,3%, die Temperatur 20 °C und die Kontaktzeit 15 min. Bestimmt wurde jeweils der dekadische Logarithmus der Keimzahlreduktion. Die Ergebnisse waren wie folgt:

| **Belastung** | l**og. Reduktion** |
|---|---|
| keine | 4,33 |
| 0,3% Albumin | 4,09 |
| 0,5% Schafblut | 4,48 |

### Beispiel 9

### Formulierung mit Aminoxid/quantitativer Suspensionstest mit M. terrae

Es wurde eine flüssige Formulierung (Konzentrat) aus

| | |
|---|---|
| 10,0% | *N*,*N-*Bis(3-aminopropyl)octylamin |
| 4,5% | Trilon® BS (Ethylendiamintetraessigsäure, fest) |
| 2,0% | BARLOX® 12i (Isododecyl-dimethyl-aminoxid) |
| 83,5% | Wasser |

hergestellt.

Die Formulierung war eine klare und lagerstabile gelbliche Lösung mit einem pH von 9,6. Eine 1%ige Verdünnung in Leitungswasser wies einen pH von 9,2 auf und im Test gemäss der in Beispiel 1 beschriebenen Methode ergab sich nach 20 s ein Schaumvolumen von 0 ml.
Die bakterizide Wirkung der Formulierung wurde im DGHM-Suspensionstest mit *Mycobacterium terrae* ATCC 15755 als Testkeim bei 38 °C bestimmt. Der Keimgehalt der Ausgangssuspension war 10^{10,21}/ml. Die Ergebnisse des Tests sind in der folgenden Tabelle 2 zusammengefasst. Angegeben sind jeweils die Konzentration (Verdünnung) der Formulierung in % (Konzentrat: 100%) und die dekadischen Logarithmen der beobachteten Reduktionsfaktoren der Keimzahlen nach jeweils 2½, 5 und 10 Minuten Einwirkungszeit sowie die dekadischen Logarithmen der absoluten Keimzahlen in Kontrollproben (ohne Desinfektionsmittel) bei 20 °C und 38 °C.

**Tabelle 2**

| *c* [%] | 2 ½ min | 5 min | 10 min |
|---|---|---|---|
| 1,0% | 3,81 | 4,31 | ≥6,06 |
| 0,5% | 2,95 | 3,30 | 4,23 |
| 0,1% | 0,78 | 1,07 | 1,34 |
| Kontrolle (20 °C) | 7,24 | 7,10 | 7,06 |
| Kontrolle (38 °C) | 7,16 | 7,01 | 7,00 |

## Patentansprüche

1. Verwendung von *N*,*N*-Bis(3-aminopropyl)octylamin als Biozid.

2. Desinfektionsmittel, **dadurch gekennzeichnet, dass** es 0,1 % bis 30% *N*,*N-*Bis(3-aminopropyl)octylamin und wenigstens einen Hilfsstoff aus der Gruppe bestehend aus Lösungsmitteln, Tensiden, Komplexbildnern, Farbstoffen, Duftstoffen, Säuren, Basen, anorganischen Salzen und organischen Salzen enthält.

3. Desinfektionsmittel nach Anspruch 2, **dadurch gekennzeichnet, dass** es Wasser als Lösungsmittel enthält.

4. Desinfektionsmittel nach Anspruch 2 oder 3, **dadurch gekennzeichnet, dass** es als zusätzlichen Wirkstoff wenigstens ein Aminoxid enthält.

5. Verwendung der Desinfektionsmittel nach einem der Ansprüche 2 bis 4 zur Desinfektion von Behältern und Rohrleitungen in der Lebensmittelindustrie.

6. Verwendung der Desinfektionsmittel nach einem der Ansprüche 2 bis 4 zur Instrumentendesinfektion.

7. Verwendung nach Anspruch 6, **dadurch gekennzeichnet, dass** die Desinfektion bei einer Temperatur unterhalb von 60 °C durchgeführt wird.

8. Verwendung nach Anspruch 6 oder 7, **dadurch gekennzeichnet, dass** die Desinfektion in einer automatischen Vorrichtung durchgeführt wird.

## Claims

1. The use of *N*,*N*-bis(3-aminopropyl)octylamine as biocide.

2. A disinfectant **characterized in that** it comprises from 0.1 % to 30% of *N*,*N*-bis(3-aminopropyl)octylamine and at least one auxiliary material selected from the group consisting of solvents, surfactants, complexing agents, colorants, fragrances, acids, bases, inorganic salts and organic salts.

3. A disinfectant as claimed in claim 2, **characterized in that** it comprises water as solvent.

4. A disinfectant as claimed in claim 2 or 3, **characterized in that** it contains at least one amine oxide as additional active compound.

5. The use of the disinfectant as claimed in one of claims 2 to 4 for disinfecting containers and pipelines in the food industry.

6. The use of the disinfectant as claimed in one of claims 2 to 4 for disinfecting instruments.

7. The use as claimed in claim 6, **characterized in that** the disinfection is carried out at a temperature below 60 °C.

8. The use as claimed in claim 6 or 7, **characterized in that** the disinfection is carried out in an automatic apparatus.

## Revendications

1. Utilisation de la N,N-bis(3-aminopropyl)octylamine comme biocide.

2. Désinfectant, **caractérisé en ce qu'**il contient 0,1% à 30% de *N*,*N*-bis(3-aminopropyl)octylamine et au moins un adjuvant choisi dans le groupe constitué par les solvants, les agents tensioactifs, les complexants, les colorants, les parfums, les acides, les bases, les sels inorganiques et les sels organiques.

3. Désinfectant selon la revendication 2, **caractérisé en ce qu'**il contient de l'eau comme solvant.

4. Désinfectant selon la revendication 2 ou 3, **caractérisé en ce qu'**il contient comme substance active supplémentaire au moins un oxyde d'amine.

5. Utilisation du désinfectant selon l'une quelconque des revendications 2 à 4 pour la désinfection de récipients et de conduites dans l'industrie alimentaire.

6. Utilisation du désinfectant selon l'une quelconque des revendications 2 à 4 pour la désinfection d'instruments.

7. Utilisation selon la revendication 6, **caractérisée en ce que** la désinfection est réalisée à une température inférieure à 60 °C.

8. Utilisation selon la revendication 6 ou 7, **caractérisée en ce que** la désinfection est réalisée dans un dispositif automatique.
